# EUROPÄISCHE PATENTSCHRIFT

(11) **EP 2 065 582 B1**
(45) Veröffentlichungstag und Bekanntmachung des Hinweises auf die Patenterteilung: **12.01.2011**
(21) Anmeldenummer: 08105597.2
(22) Anmeldetag: 17.10.2008
(51) Int. Cl.: F01N 11/00, F02D 41/02, F01N 9/00

(54) **Verfahren zur Erkennung der Beladung eines Partikelfilters**
Method for determining the charge of a particulate filter
Procédé destiné à la reconnaissance de la charge d'un filtre à particules

(30) Priorität: 27.11.2007 DE 102007057039
(43) Veröffentlichungstag der Anmeldung: 03.06.2009
(73) Patentinhaber: Robert Bosch GmbH, 70442 Stuttgart (DE)
(72) Erfinder: Skubski, Andre, 75446, Wiernsheim-Serres (DE); Buck, Simon, 86152 Augsburg (DE); Schaffrath, Andreas, 70825, Korntal-Muenchingen (DE); Seybold-Epting, Alexander, 74747, Ravenstein/Erlenbach (DE); Pfaeffle, Andreas, 71543, Wuestenrot (DE); Ciccarese, Paolo, 71634 Ludwigsburg (DE)

(56) Entgegenhaltungen:
- EP-A- 1 092 847
- EP-A- 1 296 032
- EP-A- 1 602 806
- EP-A- 1 624 172
- EP-A- 1 806 486
- WO-A-02/053891
- DE-A1- 4 230 180
- DE-A1- 10 014 224
- DE-A1- 10 145 863
- DE-A1- 10 248 431
- DE-A1- 10 252 732
- DE-A1- 19 933 988
- DE-A1-102004 055 605
- DE-A1-102006 000 036
- US-A1- 2005 217 256

## Beschreibung

Die Erfindung betrifft ein Verfahren zur Erkennung der Beladung eines Partikelfilters nach der Gattung des Anspruchs 1.

Gegenstand der vorliegenden Erfindung sind auch ein Computerprogramm sowie ein Computerprogrammprodukt mit einem Programmcode, der auf einem maschinenlesbaren Träger gespeichert ist, zur Durchführung des Verfahrens.

### Stand der Technik

Ein gattungsgemäßes Verfahren zur Erkennung der Beladung eines Partikelfilters ist aus der DE 102 48 431 A1 bekannt geworden. Bei diesem Verfahren zur Erkennung der Beladung eines Partikelfilters, insbesondere eines Partikelfilters zur Filterung der Abgase einer Brennkraftmaschine wird eine den Strömungswiderstand des Partikelfilters charakterisierende Größe ausgehend von der Temperatur im Partikelfilter und von dem Druck im Partikelfilter bestimmt und aus dem Strömungswiderstand auf die Beladung des Partikelfilters geschlossen.

Die DE 102 52 732 A1 offenbart ein Verfahren und eine Vorrichtung zum Betrieb einer einen Partikelfilter aufweisenden Abgasnachbehandlungseinrichtung einer Brennkraftmaschine, insbesondere eines Kraftfahrzeugs, bei dem wenigstens eine für den Beladungszustand des Partikelfilters charakteristische Größe aus Betriebskenngrößen des Partikelfilters ermittelt wird. Zur Erreichung einer erhöhten Genauigkeit bei der Beladungsbestimmung des Partikelfilters ist vorgesehen, die räumliche Verteilung von Abgaspartikeln im Wesentlichen in Längsrichtung des Partikelfilters zu modellieren und mittels der modellierten räumlichen Verteilung der Abgaspartikel eine Korrektur der charakteristischen Größe durchzuführen.

Bei dem aus der DE 101 45 863 A1 bekannten Verfahren wird mittels der Überwachung eines Drucksignals, das den Druck am Eingang oder am Ausgang und/oder die Druckdifferenz zwischen Ein- und Ausgang eines Partikelfilters charakterisiert, in bestimmten Betriebszuständen überprüft, ob das Drucksignal wenigstens einen bestimmten Wert annimmt. Aufgrund dieses Werts wird auf die Beladung des Partikelfilters geschlossen. Die Betriebszustände sind hierbei der Leerlauf oder der Stillstand des Motors.

Derartige Partikelfilter werden zur Reduktion der Schadstoffemissionen, insbesondere der Partikelwerte eingesetzt. Sie kommen zunehmend nicht nur in schwereren Fahrzeugen, sondern in der mittelschweren und leichten Gewichtsklasse zum Einsatz. Daher gewinnt die Reduktion der Kosten des Abgasnachbehandlungssystems immer mehr an Bedeutung. Der Einsatz von kostengünstigerem jedoch thermisch kritischerem Substratmaterial spielt in diesem Zusammenhang eine wesentliche Rolle. Die Wärme, die während der Regeneration durch die Oxidation der Rußmasse freigegeben wird, ist nämlich proportional zu der Rußbeladung im Partikelfilter und ist letztendlich verantwortlich für die Maximaltemperatur des Partikelfilters. Ein mögliches Substratmaterial, das die vorstehend genannten Eigenschaften aufweist, das heißt kostengünstiger ist, eine niedrigere Schmelztemperatur sowie eine niedrigere thermische Kapazität aufweist, ist Cordierit. Die Verwendung dieses Materials würde allerdings dazu führen, dass die maximal zugelassene Rußmenge, die sogenannte kritische Beladung im Partikelfilter deutlich reduziert werden müsste. Die entsprechende Erhöhung der Regenerationshäufigkeit wäre jedoch bei den aktuellen Einsätzen wegen der Ölverdünnung mit großen Schwierigkeiten verbunden.

Um eine Regeneration des Partikelfilters durchzuführen, sind periodische Änderungen des Motorbetriebszustands erforderlich. Entsprechende Funktionen der Motorsteuerung sorgen dafür, dass die Umschaltung des Motorbetriebszustandes zu dem optimalen Zeitpunkt erfolgt. Dieser muss so gewählt sein, dass zum einen die Nachteile des Regenerationsbetriebs, wie ein erhöhter Kraftstoffverbrauch und eine Ölverdünnung reduziert wird und zum anderen die Überbeladung des Partikelfilters verhindert wird. Die Erkennung der Beladung erfolgt, wie eingangs erläutert, im Wesentlichen durch die Bestimmung des Druckabfalls in dem Dieselpartikelfilter, beispielsweise durch einen Differenzdrucksensor, bzw. auch durch eine Simulation der Beladung des Partikelfilters, mithilfe der in Abhängigkeit von dem Motorbetriebszustand bzw. von den Parametern des Fahrzeugs die Rußmasse im Partikelfilter berechnet wird.

Die Differenzdruckmethode weist gegenüber einer Simulation folgende Vorteile auf:
- der Strömungswiderstand, der direkt aus dem Abgasvolumenstrom und dem Differenzdruck berechnet werden kann, ist zwar nicht direkt proportional zu der Beladung des Dieselpartikelfilters, aus ihm kann aber eindeutig eine Änderung der Beladung des Partikelfilters erkannt werden. Diese wiederum kann auf unterschiedliche Rußemissionen des Motors zurückgeführt werden. Aus diesem Grunde können unterschiedliche Randbedingungen, die auf das Beladungsverhalten Einfluss ausüben, wie die Lufttemperatur und der Atmosphärendruck, die Drift der Komponenten oder eine extrem dynamische Fahrweise, berücksichtigt werden;
- es ist ein Schutz des Motors vor Überbeladen des Partikelfilters möglich. Da nämlich der einem vollbeladenen Partikelfilter entsprechende Gegendruck deutlich geringer ist als der eines für den Motor gefährlich verstopften Parfikelfilters, wird der Schutz des Motors bei Überbeladen des Partikelfilters automatisch gewährleistet, indem eine Regeneration bei Erkennung eines beladenen Partikelfilters, also deutlich vor Erreichen eines für den Motor kritischen Gegendruckniveaus, eingeleitet wird;
- darüber hinaus ermöglicht dieses Verfahren auch eine hohe Genauigkeit im reinen Schwachlastbetrieb. Bei Fahrten im Stadtverkehr, bei denen die Durchschnittsgeschwindigkeit sehr niedrig ist, liegt die Temperatur in dem Partikelfilter unter einer Schwelle, ab der die Oxidation des Rußes durch Stickoxid bzw. Sauerstoff zu beobachten ist. Da der Strömungswiderstand des Partikelfilters bei einem reinen Beladungszyklus ohne Regenerationseffekte eine steigende eindeutige Beziehung zu der Beladung des Partikelfilters zeigt, ist unter diesen Randbedingungen eine genaue Aussage des Beladungszustands des Partikelfilters möglich.

Problematisch bei dem Verfahren zur Ermittlung des Beladungszustandes aufgrund eines Differenzdrucks ist es jedoch, dass beim Auftreten von Regenerationseffekten die Korrelation zwischen Strömungswiderstand und Beladung gestört werden kann. Im schlimmsten Fall kann bei extrem gemischtem Betrieb des Fahrzeugs die tatsächliche Beladung des Partikelfilters bis zu 60 % größer sein als der mittels des Verfahrens basierend auf dem Differenzdruck berechnete Wert.

Ein Verfahren und eine Vorrichtung zur Steuerung eines Abgasnachbehandlungssystems geht ferner aus der EP 1 296 032 A1 hervor. Bei diesem wird eine den Zustand des Abgasnachbehandlungssystems charakterisierende Zustandsgröße, eine Beladung eines Partikelfilters, ausgehend von einer ersten Messgröße, einem Differenzdruck, bestimmt. Eine Korrekturgröße, die die Abhängigkeit der ersten Messgröße, das heißt des Differenzdrucks, von einer weiteren Größe berücksichtigt, wird ermittelt und zur Korrektur der Zustandsgröße Beladung verwendet. Verfahren und Vorrichtungen zur Bestimmung des Beladungszustands eines Partikelfilters gehen ferner aus der EP 1 624172 A2, der WO 02/053891 A1, der DE 10 2004 055 605 A1, der DE 42 30 180 A1, der DE 102 48 431 A1, der EP 1 602 806 A1, der DE 10 2006 000 136 A1, der US 2005/0217256 A1, der DE 199 33 988 A1 sowie der EP 10 92 847 A2 hervor. Keine der aus dem Stand der Technik bekannten Vorrichtungen und Verfahren zur Bestimmung der Beladung des Partikelfilters berücksichtigen den Einfluss unterschiedlicher Betriebszustände des Fahrzeugs auf die Beladung des Partikelfilters. Insoweit kann die Beladung des Partikelfilters aufgrund dieser Verfahren und Vorrichtungen nur ungenau bestimmt werden.

Aufgabe der Erfindung ist es, ein Verfahren zur Erkennung der Beladung eines Partikelfilters basierend auf einem Differenzdruckmodell dahingehend weiterzuentwickeln, dass eine wesentlich höhere Genauigkeit der Bestimmung der Beladung des Partikelfilters erzielt wird und dadurch der Einsatz von kostengünstigeren Partikelfiltermaterialien ermöglicht wird.

### Vorteile der Erfindung

Diese Aufgabe wird gelöst durch ein Verfahren zur Erkennung der Beladung eines Partikelfilters, insbesondere eines Partikelfilters zur Filterung der Abgase einer Brennkraftmaschine, mit den Merkmalen des Anspruchs 1.

Grundidee der Erfindung ist es, die verschiedenen Betriebszustände, welche auf statistischen, die verschiedenen Fahrzustände eines Kraftfahrzeuges charakterisierenden Werten beruhen, in die Erkennung der Beladung des Partikelfilters einzubeziehen und insoweit die Auswirkung der Regenerationseffekte auf den Strömungswiderstand des Partikelfilters zu korrigieren. Die verschiedenen Fahrzustände des Kraftfahrzeugs sind charakterisiert durch Stadtbetrieb, Überlandbetrieb und Autobahnbetrieb. Hierdurch ist eine statistische betriebspunktabhängige Auswertung des Differenzdrucksignals möglich und es wird auf besonders optimale Weise eine Korrektur der Auswirkung der Regenerationseffekte auf den Strömungswiderstand des Partikelfilters realisiert. Auf diese Weise wird insbesondere eine Korrektur des Strömungswiderstandes des Partikelfilters dahingehend möglich, dass die übliche Unterschätzung der Beladung, die im Autobahnbetrieb bzw. im gemischten Betrieb festgestellt wird, kompensiert werden kann. Die verschiedene Fahrzustände des Fahrzeugs charakterisierenden Werte werden statistisch ausgewertet und bei der Erkennung der Beladung des Partikelfilters berücksichtigt. Statistisch ausgewertet bedeutet hierbei nicht nur, dass eine Bewertung erfolgt, wie die unterschiedlichen Fahrzustände in den Wert der Beladung des Partikelfilters eingehen, sondern auch eine Berücksichtigung der Häufigkeit des Auftretens der verschiedenen Fahrzustände.

Durch die in dem abhängigen Anspruch 2 aufgeführten Maßnahmen sind vorteilhafte Weiterbildungen und Verbesserungen des in dem unabhängigen Anspruch angegebenen Verfahrens möglich.

So werden die die Betriebspunkte der Brennkraftmaschine charakterisierenden Größen bevorzugt aus einer oder mehreren der folgenden Messgrößen bestimmt: Getriebestufe, Geschwindigkeit des Fahrzeugs, Drehzahl der Brennkraftmaschine, Einspritzmenge, Eingangstemperatur des Partikelfilters. Diese Betriebspunkte werden in verschiedenen Betriebszuständen der Brennkraftmaschine, die wiederum statistisch ausgewertet werden, bestimmt.

### Kurze Beschreibung der Zeichnung

Weitere Vorteile und Merkmale der Erfindung sind Gegenstand der nachfolgenden Beschreibung sowie der zeichnerischen Darstellung von Ausführungsbeispielen.

In der Zeichnung zeigen:
- Fig. 1: schematisch den Ablauf eines erfindungsgemäßen Verfahrens und
- Fig. 2: schematisch die Rußmasse eines Partikelfilters über der Fahrstrecke in unter- schiedlichen Fahrzuständen eines Kraftfahrzeugs zur Erläuterung des erfin- dungsgemäßen Verfahrens.

### Ausführungsformen der Erfindung

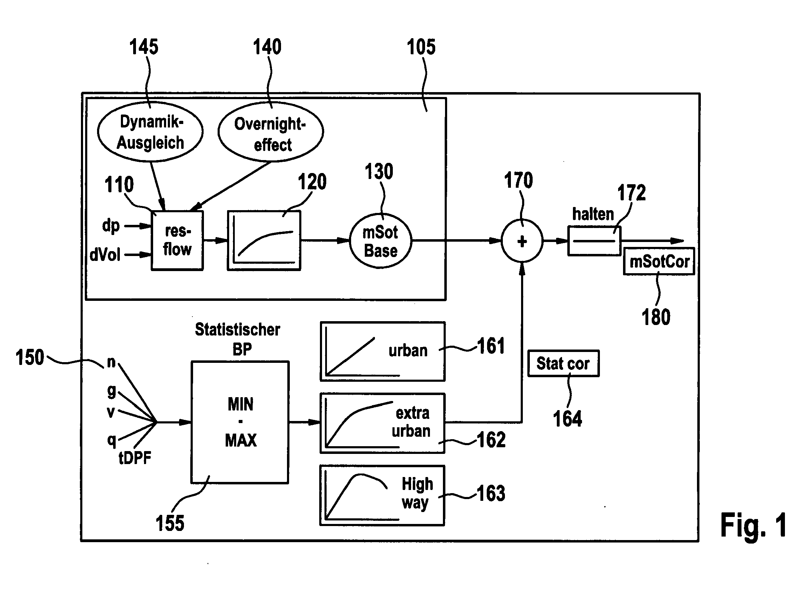

In Fig. 1 ist schematisch der Ablauf einer Ausgestaltung des erfindungsgemäßen Verfahrens dargestellt. Es ist zu bemerken, dass dieser Verfahrensablauf beispielsweise in Form eines Computerprogramms realisiert sein kann, das in einem Steuergerät eines Kraftfahrzeugs implementiert ist. Genauso ist es denkbar, das Verfahren durch eine Schaltung zu realisieren, wobei in diesem Falle die einzelnen Verfahrensschritte durch Schaltungseinheiten realisiert sind.

Das Computerprogramm kann als Computerprogrammprodukt beispielsweise in Form eines EPROMs, einer DVD, einer CD-ROM, einer Festplatte und dergleichen realisiert sein und so in unterschiedlichen Steuergeräten - auch nachträglich - implementiert werden.

Aus dem in einem Motorsteuergerät berechneten Volumenstromsignal dVol und dem von einem Differenzdrucksensor gemessenen Differenzdrucksignal dp wird der Strömungswiderstand resflow in einem Schritt 110 berechnet. In einem Verfahrensschritt 145 oder in einem entsprechendem Schaltungsblock wird das Signal resflow gefiltert, in Bezug auf dynamische Effekte korrigiert und in einem Schritt 120 in einen Rußmassenwert 130 mSotBase konvertiert. Dies kann mit genügend hoher Genauigkeit der tatsächlichen Beladung nur in einem reinen Beladungszyklus, das heißt in einem Zyklus ohne Regenerationseffekte geschehen. Das Rußmassensignal wird in dieser Prozedur 105 des Weiteren durch die Funktion "Overnight-Effek" 140 korrigiert. Dieser Effekt tritt bei langen Abstellphasen auf, in denen durch Abkühl- und Kondensationsvorgänge die Rußschicht im Partikelfilter aufreißt. Der Strömungswiderstand wird dadurch geringer und es würde nach der Abstellphase eine kleinere Rußmasse erkannt werden, die fehlerbehaftet ist, da tatsächlich kein Ruß ausgetragen wurde.

Aus fahrzeugspezifischen Steuergerätemessgrößen 150, nämlich beispielsweise der Drehzahl n der Brennkraftmaschine, der Getriebestufe g, der Geschwindigkeit v des Fahrzeugs, welches die Brennkraftmaschine und den Partikelfilter aufweist, der Einspritzmenge q und der Eingangstemperatur des Dieselpartikelfilters tDPF wird der aktuelle Betriebspunkt des Fahrzeugs, auch "zone" genannt, in einem Schritt 155 erkannt. Erkannt wird hierbei auch, ob die aktuelle Fahrweise einem Stadt-(urban), einem Überland-(extra urban) oder einem Autobahn(highway)-Betrieb entspricht. Auch die Erkennung weiterer Fahrzustände ist möglich.

In Abhängigkeit von dem erkannten Betriebspunkt wird ein Faktor für eine statistische Korrektur des Rußmassensignals 130 mSotBase vorgegeben, wobei der Faktor für die unterschiedlichen Fahrzustände Stadt-(urban) 161, Überlandbetrieb (extra urban) 162 und Autobahnbetrieb (highway) 163 entsprechend ermittelt wird.

Der auf diese Weise ermittelte statistische Korrekturwert Stat cor 164 wird in einem Schritt 170 zu dem Rußmassensignal mSotBase 130 addiert. Die Addition beruht dabei auf der Erkenntnis, dass bei an sich bekannten Verfahren immer von einer "Unterschätzung" der Rußmasse ausgegangen wird, beispielsweise - wie erwähnt - im Überlandbetrieb und im Autobahnbetrieb von einer geringeren Beladung des Partikelfilters ausgegangen wird als tatsächlich vorhanden. Aus diesem Grunde wird der Korrekturwert Stat cor 164 addiert, da ausschließlich positive Korrekturen vorzunehmen sind. Der Wert wird über den Fahrzustand beibehalten (Schritt 172) und das so korrigierte Signal mSotCor ist nunmehr das Ausgabesignal, welches die Beladung des Partikelfilters charakterisiert.

Der wesentliche Grundgedanke der vorliegenden Erfindung ist es, die Faktoren der statistischen Korrektur des mSotBase-Signals zu bestimmen, indem man die Intensität der Regenerationseffekte bei Überlandbetrieb, Autobahnbetrieb sowie Stadtbetrieb auf empirische Weise bewertet und diese Bewertung in die Korrektur einfließen lässt, wobei auch die Häufigkeit des Auftretens der unterschiedlichen Fahrzustände Stadtbetrieb 161, Überlandbetrieb 162 und Autobahnbetrieb 163 berücksichtigt werden.

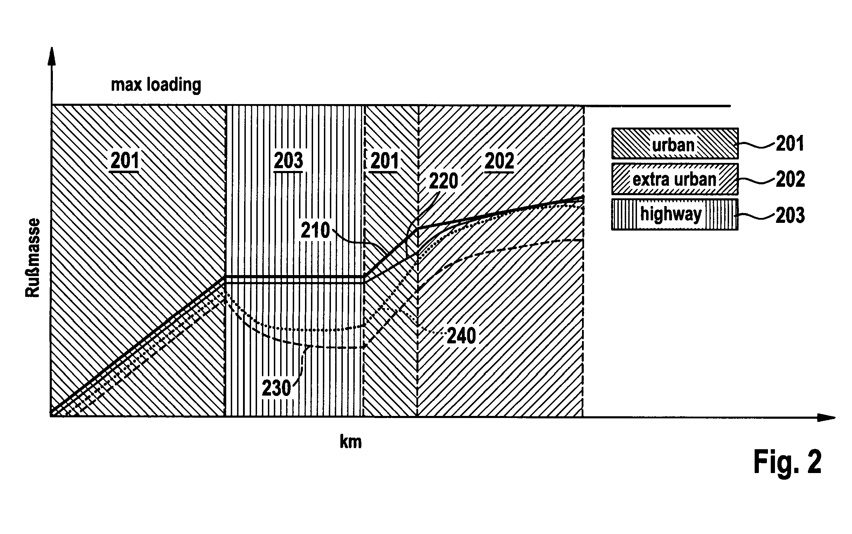

Fig. 2 zeigt eine beispielhafte Darstellung einer Fahrt mit gemischtem Fahrbetrieb. So folgt einem Stadtbetrieb (urban) 201, ein Autobahnbetrieb (highway) 203, diesem wiederum ein Stadtbetrieb 201 und ein Überlandbetrieb (extra urban) 202. Die mit Bezugszeichen 210 bezeichnete Linie stellt die tatsächliche Rußmasse im Filter dar. Die mit 220 bezeichnete Linie entspricht dem korrigierten Signal mSotCor 180. Die gestrichelte Linie 230 repräsentiert den Wert mSotBase. Sobald dieses Signal mSotBase abfällt, zum Beispiel aufgrund eines Regenerationseffekts auf der Autobahn, wird das Signal mSotCor 220 gehalten, wie es in Schritt 172 in Fig. 1 dargestellt ist. In dem Fahrzustand Stadtbetrieb oder Überlandbetrieb wird das Signal mSotCor 220 sogar "hochgerechnet", das heißt vergrößert. Erst wenn das Signal mSotBase plus einem Offset 164 das Signal mSotCor 220 wieder "einholt", wird mit diesem Signal, welches in Fig. 2 als gepunktete Linie 240 dargestellt ist, weitergerechnet. Im Ergebnis entstehen bei reinem Stadtbetrieb keine Korrekturen und somit keine Verschlechterung der Ölverdünnung, im gemischten Betrieb wird mit einem so großen Offset korrigiert, dass der Filter sicher nie überladen wird. Die Erkennung der Beladung des Partikelfilters wird daher durch die die Betriebspunkte der Brennkraftmaschine charakterisierenden Größen, die auf statistischen, die verschiedenen Fahrzustände eines Kraftfahrzeugs charakterisierenden Werten beruht, wesentlich verbessert.

## Patentansprüche

1. Verfahren zur Erkennung der Beladung eines Partikelfilters, insbesondere eines Partikelfilters zur Filterung der Abgase einer Brennkraftmaschine, wobei ein Druckabfall über dem Partikelfilter bestimmt wird und ausgehend von dem Druckabfall auf eine den Strömungswiderstand des Partikelfilters charakterisierende Größe und aus dem Strömungswiderstand auf die Beladung des Partikelfilters geschlossen wird, wobei die den Strömungswiderstand charakterisierende Größe in Abhängigkeit von Betriebspunkte der Brennkraftmaschine charakterisierende Größen korrigiert wird, **dadurch gekennzeichnet, dass** die die Betriebspunkte der Brennkraftmaschine charakterisierenden Größen auf statistischen, die verschiedenen Fahrzustände eines Kraftfahrzeugs charakterisierenden Werten beruhen, wobei die verschiedenen Fahrzustände des Kraftfahrzeugs umfassen: Stadtbetrieb, Überlandbetrieb, Autobahnbetrieb.

2. Verfahren nach Anspruch 1, **dadurch gekennzeichnet, dass** die die Betriebspunkte der Brennkraftmaschine charakterisierenden Größen aus einer oder mehreren der folgenden Messgrößen bestimmt werden: Getriebestufe (g), Geschwindigkeit des Fahrzeugs (v), Drehzahl der Brennkraftmaschine (n), Einspritzmenge (q), Eingangstemperatur des Partikelfilters (tDPF).

3. Computerprogramm, das alle Schritte eines Verfahrens nach einem der Ansprüche 1 oder 2 ausführt, wenn es auf einem Rechengerät abläuft.

4. Computerprogrammprodukt mit Programmcode, der auf einem maschinenlesbaren Trager gespeichert ist zur Durchführung des Verfahrens nach einem der Ansprüche 1 oder 2, wenn das Programm auf einem Computer oder einem Steuergerät der Brennkraftmaschine ausgeführt wird.

## Claims

1. Method for detecting the loading of a particle filter, in particular of a particle filter for filtering the exhaust gases of an internal combustion engine, with a pressure drop across the particle filter being determined, a variable which characterizes the flow resistance of the particle filter being inferred on the basis of the pressure drop, and the loading of the particle filter being inferred from the flow resistance, with the variable which characterizes the flow resistance being corrected as a function of operating points of the internal combustion engine, **characterized in that** the variables which characterize the operating points of the internal combustion engine are based on statistical values which characterize different driving states of a motor vehicle, with the different driving states of the motor vehicle comprising: city driving, cross-country driving, motorway driving.

2. Method according to Claim 1, **characterized in that** the variables which characterize the operating points of the internal combustion are determined from one or more of the following measured variables: transmission stage (g), speed of the vehicle (v), rotational speed of the internal combustion engine (n), injection quantity (q), inlet temperature of the particle filter (tDPF).

3. Computer program which carries out all the steps of a method according to one of Claims 1 or 2 when it is executed on a computer.

4. Computer program product with program code, which is stored on a machine-readable carrier, for carrying out the method according to one of Claims 1 or 2 when the program is executed on a computer or a control unit of the internal combustion engine.

## Revendications

1. Procédé pour déterminer la charge d'un filtre à particules, notamment d'un filtre à particules pour la filtration des gaz d'échappement d'un moteur à combustion interne, dans lequel une chute de pression est déterminée dans le filtre à particules, et à partir de la chute de pression, on en déduit une grandeur caractérisant la résistance à l'écoulement du filtre à particules, et à partir de la résistance à l'écoulement, on en déduit la charge du filtre à particules, la grandeur caractérisant la résistance à l'écoulement étant corrigée en fonction de grandeurs caractérisant des points de fonctionnement du moteur à combustion interne, **caractérisé en ce que** les grandeurs caractérisant les points de fonctionnement du moteur à combustion interne reposent sur des valeurs statistiques, caractérisant les différents états de conduite d'un véhicule automobile, les différents états de conduite du véhicule automobile comprenant : un mode de ville, un mode interurbain, et un mode autoroute.

2. Procédé selon la revendication 1, **caractérisé en ce que** les grandeurs caractérisant les points de fonctionnement du moteur à combustion interne sont déterminées à partir d'une ou de plusieurs des grandeurs de mesure suivantes : rapport de la boîte de vitesses (g), vitesse du véhicule (v), régime du moteur à combustion interne (n), quantité d'injection (q), température d'entrée du filtre à particules (tDPF).

3. Programme informatique qui exécute toutes les étapes d'un procédé selon l'une quelconque des revendications 1 ou 2, lorsqu'il tourne sur un ordinateur.

4. Produit de programme informatique avec code programme, qui est mémorisé sur un support lisible par machine, pour mettre en oeuvre le procédé selon l'une quelconque des revendications 1 ou 2, lorsque le programme est exécuté sur un ordinateur ou un appareil de commande du moteur à combustion interne.
